# EUROPÄISCHE PATENTSCHRIFT

(11) **EP 2 734 416 B1**
(45) Veröffentlichungstag und Bekanntmachung des Hinweises auf die Patenterteilung: **21.02.2018**
(21) Anmeldenummer: 12735578.2
(22) Anmeldetag: 19.07.2012
(51) Int. Cl.: F16F 9/14, F16F 9/12, E05F 3/14, E05F 5/06

(54) **DECKEL FÜR STAUFÄCHER IN FAHRZEUGEN**
LID FOR STORAGE COMPARTMENT IN VEHICLE
COUVERCLE POUR COMPARTIMENT DE RANGEMENT DANS VÉHICULE

(30) Priorität: 20.07.2011 DE 102011079460
(43) Veröffentlichungstag der Anmeldung: 28.05.2014
(73) Patentinhaber: Lisa Dräxlmaier GmbH, 84137 Vilsbiburg (DE)
(72) Erfinder: DIETL, Günter, 84186 Vilsheim (DE); PETERMAIER, Johann, 84130 Dingolfing (DE); DOBOS, Leonard, 84178 Kröning (DE)
(86) Internationale Anmeldenummer: PCT/EP2012/064188
(87) Internationale Veröffentlichungsnummer: WO 2013/011091

(56) Entgegenhaltungen:
- WO-A1-2011/024233
- WO-A2-2007/102111
- DE-A1- 4 121 646
- DE-B3-102006 043 540

## Beschreibung

Die vorliegende Erfindung betrifft Deckel, insbesondere für Staufächer in Fahrzeugen. Dabei kann es sich um Deckel in der Mittelkonsole, in der Armaturentafel oder im Fontbereich sowie vergleichbare Deckel handeln. Auch können die Deckel Teil eines sogenannten "Schmetterlingsdeckels" sein, bei dem die Öffnung eines Staufachs durch zwei gegenläufige Deckel verschließbar ist. Ferner sind auch zweiseitig verschwenkbare Deckel denkbar.

Letztere sind beispielsweise aus der gattungsbildenden DE 102 47 453 A1 bekannt. Alle diese Deckel haben gemein, dass sie durch ein federndes Antriebselement, z. B. eine Schenkelfeder, in Richtung der Offenstellung beaufschlagt sind, so dass der Deckelkörper zum Freigeben einer Öffnung selbsttätig in eine Offenstellung verschwenkbar ist. Darüber hinaus ist in der Regel eine Bremse, z. B. ein Silikondämpfer, vorgesehen, um die Schwenkbewegung abzubremsen bzw. zu dämpfen, wie es aus der DE 102 47 453 A1 bekannt ist.

Problematisch bei derartigen Deckeln ist einerseits, dass die Geschwindigkeit der Schwenkbewegung beim Öffnen trotz der vorgesehenen Bremse bzw. des Dämpfers nicht gleichmäßig ist und insbesondere am Beginn der Schwenkbewegung aufgrund der höheren Federkraft des verwendeten Antriebselements höher ist als am Ende der Öffnungsbewegung. Als weiter problematisch hat sich herausgestellt, dass der Deckel, wenn er die maximale Offenstellung erreicht hat nachfedert bzw. nachschwingt, was zu unerwünschten Geräuschen führt und vom Nutzer als minderwertige Ausführung der Deckelkonstruktion wahrgenommen wird.

Des Weiteren ist aus der DE 41 21 646 A1, die die Merkmale des Oberbegriffs des Anspruchs 1 offenbart, eine Vorrichtung bekannt, bei der ein Körper durch Verwendung zweier separater Silikondämpfer zweistufig abgebremst werden kann. Die DE 10 2006 043540 B3 offenbart die Verwendung eines elastischen Endanschlags, der durch eine Anschlagfläche gebildet wird und die maximale Offenstellung eines Deckelkörpers begrenzt. WO 2011/024233 A1 offenbart einen Gelenkmechanismus für einen Deckelkörper mit einer Bremse zum zweistufigen Abbremsen der Schwenkbewegung des Deckelkörpers.

Die Aufgabe der vorliegenden Erfindung besteht folglich darin einen Deckel der eingangs genannten Art derart weiter zu bilden, dass zumindest einer der oben erwähnten Nachteile vermindert oder sogar verhindert werden kann, d. h. ein Deckel mit einer gleichmäßigeren Geschwindigkeit der Schwenkbewegung und/oder mit einem verminderten bzw. ohne ein Nachfedern beim Erreichen der Endstellung, insbesondere der maximalen Offenstellung geschaffen wird.

Diese Aufgabe wird durch einen Deckel mit den Merkmalen des Anspruchs 1 gelöst. Vorteilhafte Weiterbildungen der vorliegenden Erfindung finden sich in den Unteransprüchen.

Demgemäß definiert die vorliegende Erfindung einen Deckel, insbesondere für Staufächer in Fahrzeugen, wie sie eingangs genannt wurden. Er umfasst einen Deckelkörper, der zum Freigeben und Verschließen einer Öffnung, z. B. des Staufachs zwischen einer Offenstellung und einer Schließstellung verschwenkbar ist. Dabei ist der Deckelkörper um eine Schwenkachse, insbesondere eine starre Schwenkachse verschwenkbar. Die Öffnung wird in der Regel durch einen Rahmen oder das Interieurbauteil, das das Staufach beherbergt, definiert. Anders gesagt dient der Deckelkörper zum Verschließen der Öffnung eines Hohlraums in einem Interieurbauteil bzw. der Öffnung eines Behälters oder Behältnisses. Wie es Eingangs bereits erwähnt wurde, ist der Deckelkörper durch ein federndes Antriebselement in eine Richtung, bevorzugt in die Offenstellung beaufschlagt, so dass er selbsttätig öffnet. Diesbezüglich kann es vorteilhaft sein, dass der Deckelkörper in der Schließstellung verriegelt ist und durch einen Entriegelungsmechanismus entriegelt werden kann. Nach dem Entriegeln wirkt das federnde Antriebselement und der Deckelkörper öffnet selbstständig. Darüber hinaus ist erfindungsgemäß eine Bremse zum Abbremsen der Schwenkbewegung des Deckelkörpers vorgesehen. D. h. die Bremse wirkt dem Antriebselement entgegen. Erfindungsgemäß ist die Bremse derart gestaltet, dass sie zweistufig mit unterschiedlichen Bremszeitpunkten arbeitet. Mit anderen Worten ist die Bremskraft unterschiedlich und/oder die Bremskraft wird zu unterschiedlichem Zeitpunkt bereitgestellt. Dabei kann es vorteilhaft sein, insbesondere beim Beginn der Schwenkbewegung, zu dem das federnde Antriebselement maximal gespannt ist und damit die größte Kraft auf den Deckelkörper aufbringt sowie am Ende der Schwenkbewegung des Deckelkörpers bevor er die maximale Endstellung erreicht hat eine maximale Bremskraft zur Verfügung zu stellen, während sie dazwischen geringer sein kann.

Gemäß einer bevorzugten Ausführungsform der vorliegenden Erfindung, die zusätzlich zur Verwendung des erwähnten zweistufigen Flüssigkeitsdämpfers zum Einsatz kommen kann, ist eine der Stufen der Bremse durch einen Endanschlag gebildet, der die maximale Offenstellung begrenzt. Dabei ist die Anschlagsfläche des Endanschlags jedoch so ausgestaltet, so dass eine entsprechende Gegenfläche des Deckelkörpers auf die Anschlagsfläche des Endanschlags aufläuft und durch eine Keilwirkung eine Verspannung des Deckelkörpers gegen eine (bevorzugt starre) Schwenkachse des Deckelkörpers realisiert. Beim Auflaufen des Deckelkörpers auf den Keil erfolgt eine sehr starke Abbremsung mit einer abschließenden Verspannung, so dass insbesondere ein Nachschwingen bzw. Nachfedern des Deckelkörpers in der Offenstellung vermieden werden kann.

Hierfür ist es bevorzugt, dass die Anschlagsfläche des Endanschlags gesehen in einer Richtung parallel zur Schwenkachse des Deckelkörpers geneigt ausgerichtet ist. Gleiches gilt auch für die entsprechende Gegenfläche des Deckelkörpers in der maximalen Offenstellung. Dadurch wird die beim Anschlagen des Deckelkörpers in den Endanschlag eingeleitete Kraft in eine Richtung im Wesentlichen parallel zu der vom Deckelkörper verschließbaren Öffnung gerichtete Kraft, insbesondere in eine im Wesentlichen horizontale Kraft umgelenkt und die Gegenfläche des Deckelkörpers durch die Anschlagsfläche des Endanschlags in einer Richtung von der Schwenkachse weg gedrückt, wodurch die Verspannung realisiert wird.

Hierfür ist es besonders vorteilhaft, die Anschlagsfläche des Endanschlags gesehen in einer Richtung parallel zur Schwenkachse des Deckelkörpers bzw. zur Vertikalen zu neigen. Hierbei können Winkel von 5° bis 15° in Frage kommen. Darüber hinaus ist es zur Realisierung der Keilwirkung sinnvoll den Endanschlag relativ zur Schwenkachse des Deckelkörpers auf der Seite der von dem Deckelkörper verschließbaren Öffnung anzuordnen, wobei die Anschlagsfläche vorteilhafterweise ausgehend in einer Richtung in Vertikalrichtung von oben nach unten bzw. in einer Richtung entgegen der Schwenkrichtung in die Offenstellung zur Schwenkachse hin geneigt ist. Dadurch kann ein zuverlässiges Auflaufen der Gegenfläche des Deckelkörpers auf die Anschlagsfläche des Endanschlags mit der gewünschten Brems- und Keilwirkung realisiert werden.

Darüber hinaus ist es besonders bevorzugt, den Endanschlag und die Gegenfläche im Wesentlichen starr auszugestalten, d. h. nicht federnd. Würde eine federnde Variante gewählt, so kann nicht ausgeschlossen werden, dass der Deckelkörper in der Endstellung, d. h. z. B. der Offenstellung bedingt durch die Federwirkung des Anschlags selbst oder ein Dämpferelement, das auf der Anschlagsfläche vorgesehen ist, nachfedert. Folglich ist insbesondere auch die Anschlagsfläche des Endanschlags starr ausgebildet.

Der Endanschlag kann an dem Bauteil befestigt sein, beispielsweise verschraubt, geklebt, geklipst, genietet oder geschweißt. Vorzugweise ist der Endanschlag aber einstückig und besonders bevorzugt materialeinheitlich mit dem Interieurbauteil ausgebildet.

Als eine weitere bevorzugte Ausführungsform, die zusätzlich zu den erwähnten Gestaltungen umgesetzt werden kann, schlägt die vorliegende Erfindung als eine Stufe der Bremse vor ein Federelement zu verwenden, das in einer Richtung parallel zur Schwenkachse des Deckelkörpers federnd vorgesehen ist. Eine Seitenfläche des Deckelkörpers, die die Schwenkachse schneidend ausgerichtet ist, wirkt mit diesem Federelement zusammen. Insbesondere kommt die Seitenfläche bei der Schwenkbewegung des Deckelkörpers zu einem bestimmten Zeitpunkt in Kontakt mit dem Federelement, wodurch dieses entgegen der Federkraft von der Seitenfläche weg gedrückt wird und eine Bremswirkung durch Reibung auf die Seitenfläche ausübt. Dabei kann die Seitenfläche zu Beginn oder am Ende der Schwenkbewegung vorgesehen sein. Am Beginn könnte dadurch eine frühzeitige Bremswirkung realisiert werden, um die relativ hohe Anfangsgeschwindigkeit bei maximal gespanntem Antriebselement zu bremsen oder in einem Endbereich der Schwenkbewegung bevor die maximale Offenstellung erreicht wird, um hier eine maximale Abbremsung realisieren zu können und somit ein Nachfedern des Deckels in der maximalen Offenstellung zu vermindern.

Insbesondere bei der Anordnung in einem Endbereich der Schwenkbewegung bevor die maximale Offenstellung erreicht ist, ist es bevorzugt das Federelement so anzuordnen, dass die Federkraft in der Richtung parallel zur Schwenkachse des Deckelkörpers in einer diese Richtung schneidenden Richtung, insbesondere vertikalen Richtung, zunimmt. Dadurch wird die Bremskraft in Richtung der maximalen Offenstellung maximiert und somit ein Nachschwingen weiter vermindert.

Um das Federelement kostengünstig zu realisieren, kann es als Draht- oder Blattfeder ausgebildet sein. Besonders bevorzugt ist eine Drahtfeder, die entsprechend gebogen ist. Die Drahtfeder kann dabei wenigstens zwei Schenkel aufweisen, die sich in einer Richtung erstrecken, in der das Federelement wirkt, d. h. in Richtung dessen Federkraft sowie einen entsprechend den Schenkeln verbindenden Abschnitt. Die Schenkel sind dabei in Öffnungen eines Bauteils aufgenommen, das relativ zum Deckelkörper stationär verbleibt und das Federelement hält. Das die Schenkel verbindende Element ist vorteilhafterweise nach Art einer Rampe geneigt ausgebildet und ragt auf der Seite der von dem Deckelkörper zu verschließenden Öffnungen weiter in Richtung der Seitenfläche des Deckelkörpers vor als in einem Bereich weiter entfernt von der Öffnung. Dadurch kann die Seitenfläche nach Art einer Rampe auf das Federelement bzw. den federnden Abschnitt auffahren und drückt den federnden Abschnitt in Richtung von der Seitenfläche weg. Durch dieses Wegdrücken wird im Bereich der Verbindung mit einem der Schenkel eine Federkraft von dem federnden Element gegen die Seitenfläche ausgeübt und durch Reibung die Bremswirkung realisiert. Dabei handelt es sich bei dem Federelement um ein sehr einfaches Bauteil. Darüber hinaus lässt sich die Federkraft relativ einfach einstellen und auch eine komplizierte Montage ist nicht erforderlich.

Das Federelement kann an dem Bauteil oder dem Deckelkörper befestigt sein, beispielsweise verschraubt, geklebt, geklipst, genietet oder geschweißt. Vorzugweise ist das Federelement aber einstückig und besonders bevorzugt materialeinheitlich mit dem Interieurbauteil ausgebildet.

Beispielsweise kann die Bremse einen Flüssigkeitsdämpfer, insbesondere einen Silikondämpfer umfassen, wie er beispielsweise aus der DE 102 47 453 A1 vorbekannt ist. Ein solcher Silikondämpfer umfasst vorzugsweise einen in einem Gehäuse drehbaren Rotor, wobei die Relativbewegung zwischen Rotor und Gehäuse durch eine Dämpfungsflüssigkeit, insbesondere Silikon, die in einer Kammer zwischen dem Rotor und dem Gehäuse vorgesehen ist, gedämpft wird. Der Rotor oder das Gehäuse sind feststehend gestaltet, während der Rotor oder das Gehäuse mit der Schwenkbewegung des Deckels mitdrehen, so dass bei einer Schwenkbewegung des Deckelkörpers eine Relativbewegung zwischen Gehäuse und Rotor stattfindet, die wie erwähnt gedämpft wird. Gemäß dem erfindungsgemäßen Deckel werden die zwei Bremsstufen in einem solchen Flüssigkeits- oder Silikondämpfer vereint werden. Hierfür sind erfindungsgemäß zwei getrennte Dämpferkammern in einem gemeinsamen Gehäuse vorgesehen. Darüber hinaus können auch zwei getrennte Rotoren in dem gemeinsamen Gehäuse vorgesehen sein. Dieser Flüssigkeitsdämpfer ist dabei derart ausgelegt, dass die erste Bremsstufe realisiert durch eine erste Dämpferkammer und einen ersten Dämpferrotor zu einem früheren Zeitpunkt der Schwenkbewegung des Deckelkörpers wirkt als die zweite Bremsstufe realisiert durch die zweite Dämpferkammer und den zweiten Dämpferrotor. Gleichzeitig ist es auch denkbar, dass die erste Bremsstufe eine größere oder kleinere Bremskraft zur Verfügung stellt als die zweite Bremsstufe. Beides kann realisiert werden, indem unterschiedliche Flüssigkeiten in der ersten und zweiten Dämpferkammer aufgenommen sind, die Dämpferkammern unterschiedlich gestaltet sind und/oder in dem/den Rotor/-en mehrere Vertiefungen oder Auswölbungen vorgesehen sind, die in Form, Größe und/oder Anzahl bei beiden Rotoren bzw. in den getrennten Dämpferkammern unterschiedlich vorgesehen sind. Dabei ist es vorteilhaft, dass die erste Bremsstufe bereits bei einem Schwenkwinkel von 3°, wenigstens einem Winkel von 5° einsetzt, d. h. eine Bremskraft bereitstellt, während die zweite Stufe erst bei einem Schwenkwinkel von größer 10° einsetzt.

Hier können sich die erste und zweite Bremsstufe zu einem Zeitpunkt, zu dem auch die zweite Bremsstufe wirkt, überlagern und insgesamt eine höhere Bremskraft zur Verfügung stellen.

Dadurch ist es möglich mit nur einem Bauteil die zwei Bremsstufen bereitzustellen, was hinsichtlich der Montagefreundlichkeit und damit den Kosten bevorzugt ist. Darüber hinaus lässt sich dadurch eine Vergleichmäßigung der Geschwindigkeit der Schwenkbewegung von der Schließstellung in die Offenstellung realisieren, wobei durch die erste Bremsstufe ein Abbremsen bereits zu einem frühen Zeitpunkt der Schwenkbewegung, bei der die Vorspannung des Antriebselements am größten ist, realisiert werden kann, so dass insbesondere die Anfangsbewegung von der Schließstellung in die Offenstellung abbremsbar ist.

Weitere Merkmale und Vorteile der vorliegenden Erfindung, die alleinstehend oder in Kombination mit einem oder mehreren der obigen Merkmale bzw. Ausführungen umgesetzt werden können, sind aus der folgenden Beschreibung bevorzugter Ausführungsformen der Erfindung ersichtlich. Diese erfolgt unter Bezugnahme auf die begleitenden Zeichnungen, in denen:
Figur 1 einen schematischen Teillängsschnitt eines Deckels in Bezug auf einen Endanschlag als eine der Stufen der Bremse zeigt, wobei in den Ansichten a) bis c) die Schwenkbewegung des Deckelkörpers in Richtung der Offenstellung dargestellt ist;
Figur 2 einen perspektivischen Teilquerschnitt eines Deckels gemäß einer anderen Ausführungsform, bei dem eine der Stufen der Bremse durch ein Federelement realisiert ist, zeigt, wobei in den Ansichten a) und c) die Schwenkbewegung des Deckelkörpers in Richtung der Offenstellung dargestellt ist; und
Figur 3 einen zweistufigen Flüssigkeitsdämpfer des erfindungsgemäßen Deckels gemäß einer Ausführungsform der vorliegenden Erfindung als die zwei Stufen der Bremse in a) einer Seitenansicht, b) einer Ansicht von links und c) einem Längsschnitt entlang der Linie c-c in Figur 3a zeigt.

In den Zeichnungen werden für gleiche oder vergleichbare Elemente gleiche Bezugszeichen verwendet und gegebenenfalls auf eine erneute Beschreibung verzichtet. Vielmehr gilt die entsprechende Beschreibung eines Elements in einer Ausführungsform auch für die Elemente in anderen Ausführungsformen.

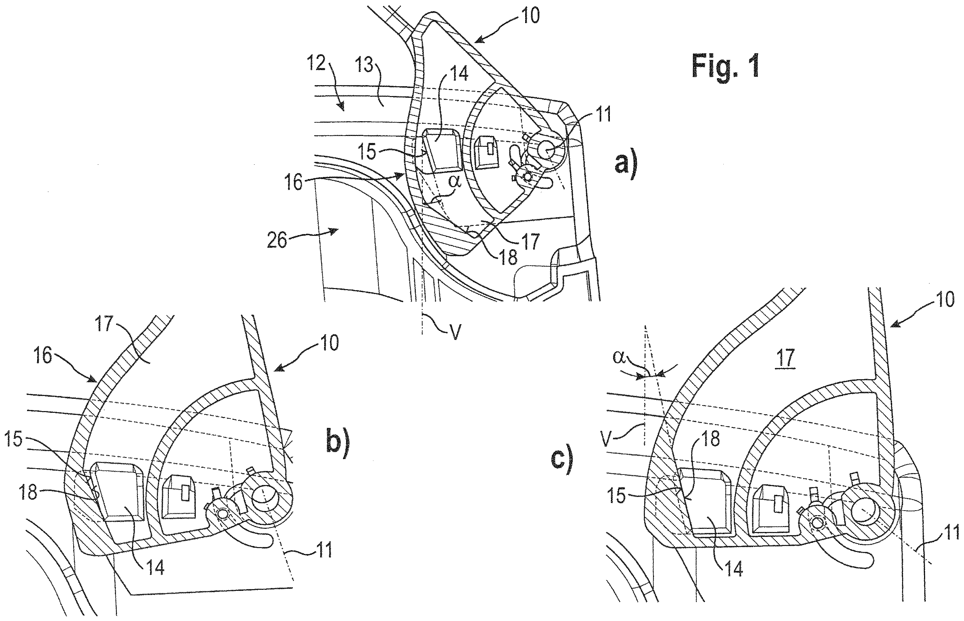

Der Deckel in Figur 1 umfasst einen Deckelkörper 10, der um eine Schwenkachse 11 verschwenkbar ist. Der Deckelkörper 10 dient dem Verschließen einer Öffnung 12, wenn er sich in der Schließstellung befindet und zum Freigeben dieser Öffnung 12, wenn er sich in der Offenstellung befindet. Die Öffnung 12 wird definiert durch ein Bauteil 13, beispielsweise die Mittelkonsole eines Kraftfahrzeugs, in dem ein Stauraum bzw. Hohlraum 26 ausgebildet ist. Der Deckelkörper 10 ist dabei an dem Bauteil 13 entsprechend um die Schwenkachse 11 verschwenkbar angelenkt. Der Deckelkörper 10 wird durch ein nicht dargestelltes federndes Antriebselement, z. B. eine Schenkelfeder, in die Offenstellung beaufschlagt. Dabei ist der Deckelkörper 10 bevorzugt in der Schließstellung verriegelt und kann durch einen Entriegelungsmechanismus frei gegeben werden. Nach dem Freigeben verschwenkt der Deckelkörper 10 selbsttätig und angetrieben durch das Antriebselement im Uhrzeigersinn um die Schwenkachse 11 von der Schließstellung bis der Deckelkörper 10 die maximale Offenstellung (Figur 1c) erreicht. In den Figuren 1a und 1b sind jeweilige Zwischenstellungen des Deckelkörpers 10 von der Schließstellung in die Offenstellung dargestellt.

Einstückig oder separat mit dem Bauteil 13 verbunden ist ein Endanschlag 14. Dieser ragt von einer Seitenfläche des Bauteils 13 in Richtung des Deckelkörpers 10 parallel zur Schwenkachse 11 vor. Er weist eine von der Schwenkachse 11 weg weisende Anschlagsfläche 15 auf, die in einer Richtung gesehen parallel zur Schwenkachse 11, wie in Figur 1 dargestellt, zu einer Vertikalen V in einem Winkel α geneigt ist. Dieser beträgt bei der dargestellten Ausführungsform 5°.

Der Endanschlag 14 sowie die Anschlagsfläche 15 sind bevorzugt starr ausgebildet und z. B. aus glasfaserverstärktem ABS-PC.

Der Deckelkörper 10 weist in seinem der Schwenkachse 11 zugewandten Endabschnitt einen kreissegmentförmigen Scharnierbereich 16 auf. Dieser schließt sich an die der Öffnung 12 zugewandte Unterseite des Deckelkörpers 10 an und umfasst einen kreissegmentförmigen Hohlraum 17, der auf der dem Endanschlag 14 zugewandten Seite offen ist, so dass der Endanschlag 14 bei der Schwenkbewegung um die Schwenkachse 11 innerhalb des Hohlraums 17 aufgenommen ist. Eine den Hohlraum 17 begrenzende Seitenwand ist dabei als Gegenfläche 18 für die Anschlagsfläche 15 des Endanschlags 14 ausgestaltet. Sie ist, wie in Figur 1c dargestellt, in der maximalen Offenstellung des Deckelkörpers 10 ebenfalls im Winkel α zur Vertikalen V geneigt ausgebildet. Dabei sind die Neigungen entsprechend komplementär, so dass die Anschlagsfläche 15 und die Gegenfläche 18 im maximal geöffneten Zustand, wie in Figur 1c dargestellt, flächig aufeinanderliegen.

Ferner ist die Neigung der Anschlagsfläche 15 so gestaltet, so dass sie zur Schwenkachse 11 hin geneigt ist, wobei der Abstand der Anschlagsfläche 15 zur Schwenkachse 11 in Richtung der Vertikalen V von oben nach unten bzw. von der Öffnung 12 ausgehend abnimmt.

Die Funktionsweise des Endanschlags 14 wird im Folgenden erläutert.

Wird der Deckelkörper 10 aus der Schließstellung in Richtung der Offenstellung verschwenkt, bewegt sich die Gegenfläche 18 in Richtung der Anschlagsfläche 15 des Anschlags 14, wie es in Figur 1a dargestellt ist, bis, wie in Figur 1b gezeigt, die Gegenfläche 18 auf die Anschlagsfläche 15 aufläuft. In der folgenden Schwenkbewegung wird durch das Auflaufen eine Kraft erzeugt, die den Deckelkörper 10 in den Figuren nach links drückt. Da der Deckelkörper 10 an der Schwenkachse 11 starr befestigt ist, erfolgt eine Verspannung des Deckelkörpers 10 durch den als Keil wirkenden Endanschlag 14 gegen die Schwenkachse 11. Beim Auflaufen der Gegenfläche 18 auf die Anschlagsfläche 15 wird die Schwenkbewegung des Deckelkörpers 10 bereits abgebremst, bevor sie schlagartig, wie in Figur 1c durch die Verspannung gestoppt wird. Dadurch kann ein Nachschwingen bzw. Nachfedern des Deckelkörpers 10 durch das Abbremsen in der Endstellung, hier der maximalen Offenstellung, zuverlässig verhindert werden. Darüber hinaus ist dies ohne zusätzliche Bauteile und damit kostengünstig realisierbar.

Anders ausgedrückt wird die von der Gegenfläche 18 auf die Anschlagsfläche 15 aufgebrachte Kraft der Schwenkbewegung in eine im Wesentlichen waagerechte Kraft in Richtung der Schwenkachse 11 umgeleitet.

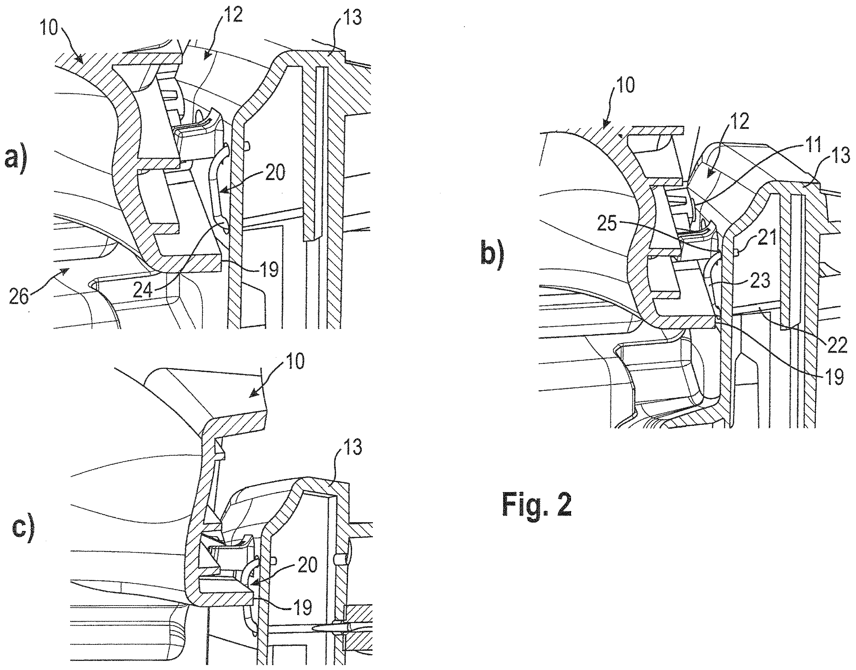

Figur 2 zeigt ebenfalls einen Deckel mit einem Deckelkörper 10, der eine Öffnung 12 in einem Bauteil 13 verschließt und um eine Schwenkachse 11 zwischen einer Schließstellung und einer Offenstellung zum Freigeben der Öffnung 12 verschwenkbar ist.

Eine der Stufen der Bremse wird hier durch ein Federelement 20 gebildet. Dieses besteht aus einem Federdraht, der entsprechend gebogen ist. Er weist zwei im Wesentlichen in der gleichen Richtung verlaufende parallele Schenkel 21 und 22 auf, die durch einen federnden Abschnitt 23 verbunden sind. Der federnde Abschnitt 23 kann an der Verbindungsstelle 24 zu dem Schenkel 22 in einer Richtung, in der sich der Schenkel 22 erstreckt, federn. D. h. wird er mit einer Kraft in Richtung des Schenkels 22 beaufschlagt, so wird durch die Verbindungsstelle 24 eine Federkraft in der entgegengesetzten Richtung ausgeübt.

Der Deckelkörper 10 weist eine Seitenfläche 19 auf, die in einer Ebene liegt, welche die Schwenkachse 11 schneidet. Insbesondere verläuft die Seitenfläche 19 in einer Richtung senkrecht zur Richtung der Federwirkung des Federelements 20 und damit der Schenkel 21 und 22.

Dabei ist der federnde Abschnitt 23 relativ zur Vertikalen geneigt gestaltet und bildet eine Rampe. Die Neigung ist auch relativ zur Seitenfläche 19 erkennbar, d. h. das Federelement verläuft bei dieser Ausführungsform nicht parallel zur Seitenfläche 19, insbesondere der federnde Abschnitt 23 nicht.

In dem Bauteil 13 sind jeweils zwei Öffnungen 25 vorgesehen, so dass die Schenkel 22 und 21 des Federelements 20 von der Seite des Stauraums 14 her in die Öffnungen eingesetzt werden können. Der Schenkel 22 kann darüber hinaus an seinem dem Verbindungsabschnitt 24 abgewandten Ende im Bauteil 13 befestigt werden. Das Ende des Schenkels 21 hingegen bleibt, wie es in den Figuren ersichtlich ist, frei beweglich.

Die Funktionsweise des Federelements aus Figur 2 wird im Folgenden näher erläutert. Der Deckelkörper 10 ist in den verschiedenen Ansichten a) bis c) in verschiedenen Stadien der Schwenkbewegung dargestellt. In Figur 2a bewegt sich der Deckelkörper 10 aus der Schließstellung in Richtung der Offenstellung. Dabei steht die Seitenfläche 19 des Deckelkörpers 10 zunächst nicht in Kontakt mit dem Federelement 20.

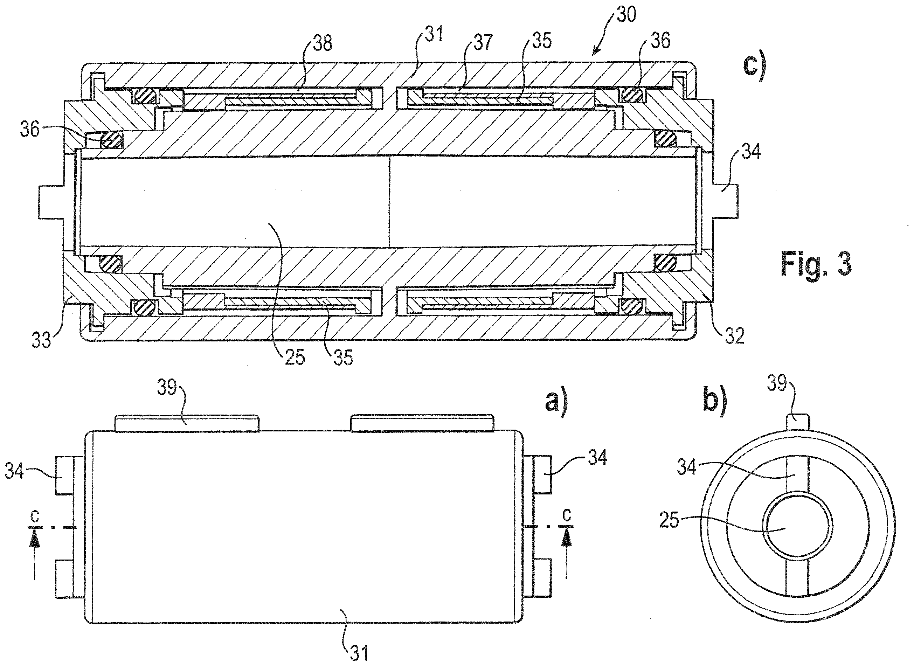

Bei der weiteren Schwenkbewegung in Richtung der Offenstellung, wie in Figur 2b dargestellt, kommt die Seitenfläche 19 mit dem unteren Abschnitt des federnden Elements 23 in Kontakt bzw. läuft die Seitenfläche 19 auf das Federelement 20 auf. Dabei wird insbesondere bei der weiteren Bewegung, wie aus Figur 2c ersichtlich, das Federelement 20 bzw. der federnde Abschnitt 23 in Richtung der Seitenwand des Bauteils 13, d. h. von der Seitenwand 19 gedrückt. Der federnde Abschnitt 23 verbiegt sich um den Verbindungsabschnitt 24 und es wird eine entsprechend gegengerichtete Federkraft gegen die Seitenfläche 19 ausgeübt. Diese entsteht dadurch, dass der federnde Abschnitt 23 in seine Ursprungsstellung zurückfedern will. Durch diese Federkraft wird durch Reibung des federnden Abschnitts 23 mit der Seitenwand 19 des Deckelkörpers 10 eine Bremskraft auf den Deckelkörper 10 ausgeübt. Diese nimmt durch die Neigung des Federelements 23 mit zunehmenden Öffnungsgrad des Deckelkörpers 10 zu, so dass eine verstärkte Abbremsung am Ende der Schwenkbewegung bevor die maximale Offenstellung erreicht ist, erzielt werden kann. Dadurch kann das Federelement 20 ebenso wie der in Bezug auf Figur 1 beschriebene Endanschlag 14 zuverlässig verhindern, dass der Deckelkörper 10 bei Erreichen der maximalen Offenstellung nachfedert, da die Geschwindigkeit des Deckelkörpers vor dem Auftreffen auf den oder einen Endanschlag bereits sehr gering gehalten wird. Dabei kann der Endanschlag auch herkömmlich ausgebildet sein. Der Flüssigkeitsdämpfer, vorzugsweise ein Silikondämpfer, des erfindungsgemäßen Deckels ist selbst zweistufig gestaltet, wie es im Folgenden unter Bezugnahme auf Figur 3 erläutert ist, die nur einen solchen zweistufigen Silikondämpfer offenbart. Ein solcher zweistufiger Silikondämpfer 30 weist ein gemeinsames Gehäuse 31 auf, das über entsprechende Vorsprünge 39 an dem Bauteil 13, wie es in Bezug auf die Figuren 1 und 2 erläutert wurde, in Rotationsrichtung um die Schwenkachse 11 formschlüssig gehalten werden kann, indem die Vorsprünge 39 in entsprechende Vertiefungen in dem Bauteil 13 eingreifen. Andere Festlegungsvarianten des Gehäuses 31 an dem Bauteil 13 sind selbstverständlich ebenso denkbar. Ebenso ist es denkbar, dass die Schwenkachse 11 relativ zum Bauteil 13 stationär verbleibt und der Deckelkörper 10 um die Schwenkachse 11 rotiert, wobei das Gehäuse 31 in diesem Fall durch die Vorsprünge 39 oder eine andere Befestigungsvariante stationär zum Deckelkörper 10 positioniert würde. In dem Gehäuse sind ein erster Rotor 32 und ein zweiter Rotor 33 aufgenommen, die relativ zum Gehäuse 31 drehbar gehalten sind. Diese Rotatoren weisen jeweils einen Mitnehmer 34 auf, über den in Rotationsrichtung formschlüssig eine Verbindung mit dem Deckelkörper 10 oder alternativ dem Bauteil 13 realisiert wird. Auch ist es denkbar die Schwenkachse 11, wenn diese mit dem Deckelkörper 10 dreht oder stationär ist, in die Durchgangsöffnung 25, durch die die Drehachse verlaufen wird, einzupressen, wie es beispielsweise in der DE 10 2010 040 707 beschrieben ist. Darüber hinaus sind Silikondämpfer als solche aus der WO 2007/102111 A2 bekannt, auf die der Fachmann bezüglich Details von Silikondämpfern verwiesen wird.

Die Rotoren 32 und 33 weisen jeweils einen Dämpferabschnitt 35 auf, der in einer zugehörigen ersten 37 und zweiten 38 Dämpferkammer angeordnet ist. In den Dämpferkammern 37 und 38 ist jeweils eine Dämpfungsflüssigkeit, z. B. Silikon, aufgenommen. Die Dämpferkammer 37 und 38 sind jeweils durch Dichtungen 36, die zwischen dem Rotor 32 und 33 und dem Gehäuse 31 abdichten dicht verschlossen. Derartige Silikondämpfer weisen bekanntermaßen einen Anfangsleerlauf auf bevor die Dämpfungswirkung einsetzt. D. h. es erfolgt zunächst eine ungedämpfte Rotation des Rotors relativ zum Gehäuse (Freilauf) bevor die Dämpfungskraft einsetzt. Dies ist abhängig vom verwendeten Dämpfungsmedium, d. h. der verwendeten Flüssigkeit, der Auslegung bzw. Größe der Dämpferkammern sowie der Ausgestaltung der Dämpfungsabschnitte 35 der Rotoren. Gleiches gilt für die anschließend entstehende Dämpfungskraft.

Der Flüssigkeitsdämpfer des erfindungsgemäßen Deckels, wie er in Figur 3 dargestellt ist, weist eine erste Dämpfungsstufe mit dem Rotor 32 und eine zweite Dämpfungsstufe mit dem Rotor 33 auf. Die erste Dämpfungsstufe mit dem Rotor 32 stellt eine erste Bremsstufe bereit, die einen geringen Leerlauf aufweist und die Dämpfungskraft bereits bei einem ersten Schwenkwinkel von z. B. 5° zur Verfügung stellt. Die zweite Bremsstufe wird durch den Rotor 33 bereitgestellt, der einen größeren Leerlauf aufweist und erst zu einem späteren Zeitpunkt wirkt. D. h. der Leerlauf dieses Silikondämpfers ist größer. Beispielsweise setzt die Bremswirkung durch den Rotor 33, d. h. die zweite Bremsstufe beim Schwenkwinkel von 15° ein. Nachdem die zweite Bremsstufe durch den Rotor 33 einsetzt, addieren sich die Bremswirkungen der beiden Rotoren 32 und 33 zu einer größeren Bremskraft. Durch optimale Einstellung des Bremszeitpunkts und/oder Bremskraft der jeweiligen Bremsstufen durch den ersten und zweiten Rotor 32 und 33 kann eine gewünschte Geschwindigkeit der Schwenkbewegung des Deckelkörpers 10 optimal eingestellt werden bzw. eine gleichmäßige Geschwindigkeit von der Schließstellung bis in die Offenstellung realisiert werden.

Die dargestellten zwei Stufen können dabei ebenso mit einer dritten Stufe kombiniert werden, die beispielsweise durch ein Federelement 20 und/oder einen Endanschlag 14, wie sie in Bezug auf die Figuren 1 und 2 beschrieben wurden, ergänzt werden, die das Öffnungsverhalten weiter optimieren können. Eine unterschiedliche Bremskraft oder einen unterschiedlichen Leerlauf lassen sich auf verschiedenste Art und Weise einstellen. Z. B. könnten unterschiedliche Dämpfungsmedien, d. h. Flüssigkeiten in den Kammern 37, 38 der Rotoren 32 und 33, zum Einsatz kommen, die Kammern 37, 38 selbst könnten unterschiedlich gestaltet sein, d. h. das Spaltmaß zwischen den Dämpfungsabschnitten 35 der Rotoren 32 und 33 und der Innenwandung der Kammern 37, 38 könnte unterschiedlich gestaltet sein und/oder die Beschaffenheit der Dämpfungsabschnitte 35 der Rotoren 32 und 33 könnten unterschiedlich gestaltet sein. Hierfür ist es bekannt Durchgangsöffnungen und/oder Vertiefungen bzw. Erhebungen in den Dämpfungsabschnitten 35 der Rotoren vorzusehen, die zur Dämpfungswirkung beitragen. Auch sind beispielsweise Flügel denkbar, die sich gleichmäßig verteilt über den Umfang der Dämpfungsabschnitte 35 der Rotoren 32 und 33 erstrecken und bei einer Rotationsbewegung die Dämpfungskraft bereitstellen. Um eine unterschiedliche Dämpfungskraft und/oder ein unterschiedliches Leerlaufverhalten bereitzustellen, können diese Dämpfungselemente in Anzahl, Größe, Gestalt sowie Verteilung etc. unterschiedlich vorgesehen werden. Auch ist es prinzipiell denkbar dies einstellbar zu gestalten. Beispielsweise könnten in den Dämpfungsabschnitten 37 und 38 Durchgangsöffnungen vorgesehen sein, die von einer Hülse überdeckbar sind. Dabei könnte die Hülse von außen zugänglich drehbar sein und ebenso Öffnungen aufweisen, die in Deckung mit den Löchern in den Dämpfungsabschnitten 35 der Rotoren 32 und 33 gebracht werden können. Fluchten die Öffnungen in der Hülse mit den Löchern in den Dämpfungsabschnitten 35 ist die Dämpfungskraft klein. Überdecken sie sich teilweise ist sie größer, usw.

## Patentansprüche

1. Deckel insbesondere für Staufächer in Fahrzeugen, umfassend
einen Deckelkörper (10), der zum Freigeben und Verschließen einer Öffnung (12) eines Bauteils (13) zwischen einer Offenstellung und einer Schließstellung um eine Schwenkachse (11) verschwenkbar ist,
ein federndes Antriebselement, das den Deckelkörper (10) in eine Richtung, bevorzugt die Offenstellung beaufschlagt,
eine Bremse (14; 20; 30) zum Abbremsen der Schwenkbewegung des Deckelkörpers (10), wobei die Bremse wenigstens zweistufig mit unterschiedlicher Bremsleistung und/oder unterschiedlichem Bremszeitpunkt arbeitet, wobei die Bremse einen Flüssigkeitsdämpfer (30) umfasst, **dadurch gekennzeichnet, dass** der Flüssigkeitsdämpfer (30) zur Bildung einer ersten und zweiten Bremsstufe zwei getrennte Dämpferkammern (37, 38) in einem gemeinsamen Gehäuse (31) umfasst, in dem ein erster Rotor (32) und ein zweiter Rotor (33) aufgenommen sind, die relativ zum Gehäuse (31) um die Schwenkachse (11) drehbar gehalten sind und jeweils einen Mitnehmer (34) aufweisen, über den die Rotationsrichtung formschlüssig eine Verbindung mit dem Deckelkörper (10) oder alternativ dem Bauteil (13) realisiert wird, und dass die Rotoren (32,33) jeweils einen Dämpferabschnitt (35) aufweisen, der in der zugehörigen ersten (37) und zweiten (38) Dämpferkammer angeordnet ist, wobei die erste Bremsstufe durch einen im Vergleich zur zweiten Bremsstufe geringeren Leerlauf bereits zu einem früheren Zeitpunkt der Schwenkbewegung des Deckelkörpers (10) wirkt als die zweite Bremsstufe, und bei dem sich die erste Bremsstufe und die zweite Bremsstufe zumindest zeitweilig überlagern.

2. Deckel nach Anspruch 1, bei dem der Flüssigkeitsdämpfer (30) einer Silikondämpfer ist.

3. Deckel nach einem der vorstehenden Ansprüche umfassend zwei der Deckelkörper, die in entgegengesetzten Richtungen verschwenkbar sind und jeweils die Bremse (14; 20; 30) aufweisen.

4. Deckel nach einem der vorstehenden Ansprüche umfassend eine dritte Bremsstufe, die zusätzlich zur ersten und zweiten Bremsstufe wirkt.

5. Deckel nach Anspruch 4, bei dem die dritte Bremsstufe der Bremse durch einen Endanschlag (14) gebildet ist, der die maximale Offenstellung begrenzt, wobei eine Anschlagsfläche (15) des Endanschlags (14) derart ausgerichtet ist, dass der Endanschlag (14) beim Anschlagen des Deckelkörpers (10) an die Anschlagsfläche (15) im Zusammenspiel mit der Schwenkachse (11) des Deckelkörpers (10) eine Keilwirkung erzeugt.

6. Deckel nach Anspruch 5, bei dem die Anschlagsfläche (15) des Endanschlags (14) gesehen in einer Richtung parallel zur Schwenkachse (11) des Deckelkörpers (10) geneigt ausgerichtet ist, so dass die beim Anschlagen des Deckelkörpers (10) in den Endanschlag (14) eingeleitete Kraft in eine Richtung im Wesentlichen parallel zu der von dem Deckelkörper (10) verschließbaren Öffnung (12) gerichtete Kraft, insbesondere eine im Wesentlichen horizontale Kraft umgelenkt wird.

7. Deckel nach Anspruch 6, bei dem die Anschlagsfläche (15) des Endanschlags (14) gesehen in einer Richtung parallel zur Schwenkachse (11) des Deckelkörpers (10) zur Vertikalen geneigt ist.

8. Deckel nach einem der Ansprüche 5 bis 7, bei dem der Endanschlag (14) relativ zur Schwankachse (11) des Deckelkörpers (10) auf der Seite der von dem Deckelkörper (10) verschließbaren Öffnung (12) angeordnet ist.

9. Deckel nach einem der Ansprüche 5 bis 8, bei dem der Endanschlag (14) starr ausgebildet ist.

10. Deckel nach Anspruch 4, bei dem die dritte Bremsstufe der Bremse durch ein Federelement (20) gebildet ist, dass in einer Richtung parallel zu einer Schwenkachse (11) des Deckelkörpers (10) federnd vorgesehen ist und mit einer Seitenfläche (19) des Deckelkörpers (10), die die Schwenkachse (11) schneidend ausgerichtet ist zusammen wirkt.

11. Deckel nach Anspruch 10, bei dem des Federelement (20) so angeordnet ist, dass die Federkraft in der Richtung parallel zur Schwenkachse (11) des Deckelkörpers (10) in einer diese Richtung schneidenden Richtung, insbesondere Vertikalen Richtung zunimmt.

12. Deckel nach Anspruch 10 oder 11, bei dem das Federelement (20) eine Draht- oder Blattfeder ist.

13. Deckel nach einem der Ansprüche 10 bis 12, bei dem die Seitenfläche (19) des Deckelkörpers (10) erst nachdem der Deckelkörper (10) einen gewissen Schwenkweg zurückgelegt hat mit dem Federelement (20) in Kontakt kommt.

14. Deckel nach einem der Ansprüche 10 bis 13, bei dem das Federelement (20) und/oder der Endanschlag (14) einstückig, insbesondere materialeinheitlich mit dem Bauteil (13) ausgebildet sind.

## Claims

1. Lid, in particular for storage compartments in vehicles, comprising a lid body (10) which is pivotable about a pivot axis (11) between an open position and a closed position in order to open up and close an opening (12) of a component (13), a resilient drive element which acts upon the lid body (10) in one direction, preferably the open position, a brake (14; 20; 30) for braking the pivoting movement of the cover body (10), wherein the brake operates at least in two stages with a different braking power and/or different braking time, wherein the brake comprises a liquid damper (30), **characterized in that**, in order to form a first and second braking stage, the liquid damper (30) comprises two separate damper chambers (37, 38) in a common housing (31) in which a first rotor (32) and a second rotor (33) are accommodated, said rotors being held so as to be rotatable about the pivot axis (11) relative to the housing (31) and each having a driver (34) via which the rotational direction a connection with the lid body (10) or alternatively with the component (13) is realized in an interlocking manner, and **in that** the rotors (32, 33) each have a damper portion (35) which is arranged in the associated first damper chamber (37) and second damper chamber (38), wherein the first braking stage already acts at an earlier point of the pivoting movement of the lid body (10) than the second braking stage because of a lower idling speed in comparison to the second braking stage, and in which the first braking stage and the second braking stage are at least temporarily combined.

2. Lid according to Claim 1, in which the liquid damper (30) is a silicone damper.

3. Lid according to either of the preceding claims, comprising two of the lid bodies which are pivotable in opposite directions and each have the brake (14; 20; 30) .

4. Lid according to one of the preceding claims, comprising a third braking stage which acts in addition to the first and second braking stages.

5. Lid according to Claim 4, in which the third braking stage of the brake is formed by an end stop (14) which delimits the maximum open position, wherein a stop surface (15) of the end stop (14) is oriented in such a manner that, when the lid body (10) strikes against the stop surface (15), the end stop (14) produces a wedge effect in cooperation with the pivot axis (11) of the lid body (10).

6. Lid according to Claim 5, in which the stop surface (15) of the end stop (14), as seen in a direction parallel to the pivot axis (11) of the lid body (10), is oriented in an inclined manner, and therefore the force introduced into the end stop (14) during the striking of the lid body (10) is deflected in a direction substantially parallel to the force directed opening (12) closable by the lid body (10), in particular a substantially horizontal force.

7. Lid according to Claim 6, in which the stop surface (15) of the end stop (14), as seen in a direction parallel to the pivot axis (11) of the lid body (10), is inclined with respect to the vertical.

8. Lid according to one of Claims 5 to 7, in which the end stop (14) is arranged relative to the pivot axis (11) of the lid body (10) on that side of the opening (12) which is closable by the lid body (10).

9. Lid according to one of Claims 5 to 8, in which the end stop (14) is of rigid design.

10. Lid according to Claim 4, in which the third braking stage of the brake is formed by a spring element (20) which is provided resiliently in a direction parallel to a pivot axis (11) of the lid body (10) and interacts with a side surface (19) of the lid body (10), which side surface is oriented in a manner intersecting the pivot axis (11).

11. Lid according to Claim 10, in which the spring element (20) is arranged in such a manner that the spring force in the direction parallel to the pivot axis (11) of the lid body (10) increases in a direction intersecting said direction, in particular vertical direction.

12. Lid according to Claim 10 or 11, in which the spring element (20) is a wire spring or leaf spring.

13. Lid according to one of Claims 10 to 12, in which the side surface (19) of the lid body (10) comes into contact with the spring element (20) only after the lid body (10) has covered a certain pivoting distance.

14. Lid according to one of Claims 10 to 13, in which the spring element (20) and/or the end stop (14) are formed integrally with, in particular of the same material as, the component (13).

## Revendications

1. Couvercle, en particulier pour des compartiments de rangement dans des véhicules, comprenant un corps de couvercle (10) qui peut pivoter autour d'un axe de pivotement (11) pour ouvrir et fermer une ouverture (12) d'un composant (13) entre une position ouverte et une position fermée,
un élément d'entraînement à ressort, qui sollicite le corps de couvercle (10) dans une direction, de préférence la position ouverte,
un frein (14 ; 20 ; 30) pour freiner le mouvement de pivotement du corps de couvercle (10), le frein fonctionnant au moins avec deux étages avec une puissance de freinage différente et/ou un instant de freinage différent, le frein comprenant un amortisseur liquide (30),
**caractérisé en ce que**
l'amortisseur liquide (30), pour former un premier et un deuxième étage de freinage, comprend deux chambres d'amortisseur séparées (37, 38) dans un boîtier commun (31) dans lequel sont reçus un premier rotor (32) et un deuxième rotor (33) qui sont retenus de manière à pouvoir tourner autour de l'axe de pivotement (11) par rapport au boîtier (31) et qui présentent chacun un dispositif d'entraînement (34) par le biais duquel le sens de rotation est réalisée une liaison par engagement par correspondance de formes avec le corps de couvercle (10) ou en variante avec le composant (13),
et **en ce que** les rotors (32, 33) présentent chacun une portion d'amortisseur (35) qui est disposée dans la première (37) et la deuxième (38) chambre d'amortisseur associée, le premier étage de freinage agissant avec une course à vide plus faible par rapport au deuxième étage de freinage déjà à un instant plus précoce du mouvement de pivotement du corps de couvercle (10) que le deuxième étage de freinage, et le premier étage de freinage et le deuxième étage de freinage se superposant au moins temporairement.

2. Couvercle selon la revendication 1, dans lequel l'amortisseur liquide (30) est un amortisseur à silicone.

3. Couvercle selon l'une quelconque des revendications précédentes, comprenant deux des corps de couvercle qui peuvent pivoter dans des sens opposés et qui présentent chacun le frein (14 ; 20 ; 30).

4. Couvercle selon l'une quelconque des revendications précédentes, comprenant un troisième étage de freinage qui agit en plus du premier et du deuxième étage de freinage.

5. Couvercle selon la revendication 4, dans lequel le troisième étage de freinage du frein est formé par une butée de fin de course (14) qui limite la position d'ouverture maximale, une surface de butée (15) de la butée de fin de course (14) étant prévue de telle sorte que la butée de fin de course (14), lors de la venue en butée du corps de couvercle (10) contre la surface de butée (15) provoque, un effet de cale en collaboration avec l'axe de pivotement (11) du corps de couvercle (10) .

6. Couvercle selon la revendication 5, dans lequel la surface de butée (15) de la butée de fin de course (14), vue dans une direction parallèle à l'axe de pivotement (11) du corps de couvercle (10) est orientée de manière inclinée, de telle sorte que la force introduite lors de la venue en butée du corps de couvercle (10) contre la butée de fin de course (14) soient déviée dans une direction essentiellement parallèle à la force orientée l'ouverture (12) pouvant être fermée par le corps de couvercle (10), en particulier une force essentiellement horizontale.

7. Couvercle selon la revendication 6, dans lequel la surface de butée (15) de la butée de fin de course (14) est inclinée par rapport à la verticale dans une direction parallèle à l'axe de pivotement (11) du corps de couvercle (10).

8. Couvercle selon l'une quelconque des revendications 5 à 7, dans lequel la butée de fin de course (14) est disposée par rapport à l'axe de pivotement (11) du corps de couvercle (10) du côté de l'ouverture (12) pouvant être fermée par le corps de couvercle (10).

9. Couvercle selon l'une quelconque des revendications 5 à 8, dans lequel la butée de fin de course (14) est réalisée sous forme rigide.

10. Couvercle selon la revendication 4, dans lequel le troisième étage de freinage du frein est formé par un élément de ressort (20) qui est prévu avec effet de ressort dans une direction parallèle à un axe de pivotement (11) du corps de couvercle (10), et qui coopère avec une face latérale (19) du corps de couvercle (10) qui est orientée de manière à couper l'axe de pivotement (11).

11. Couvercle selon la revendication 10, dans lequel l'élément de ressort (20) est disposé de telle sorte que la force de ressort dans la direction parallèlement à l'axe de pivotement (11) du corps de couvercle (10) augmente dans une direction coupant cette direction, notamment dans une direction verticale.

12. Couvercle selon la revendication 10 ou 11, dans lequel l'élément de ressort (20) est un ressort à boudin ou un ressort à lame.

13. Couvercle selon l'une quelconque des revendications 10 à 12, dans lequel la face latérale (19) du corps de couvercle (10) vient en contact avec l'élément de ressort (20) seulement après que le corps de couvercle (10) a parcouru une certaine course de pivotement.

14. Couvercle selon l'une quelconque des revendications 10 à 13, dans lequel l'élément de ressort (20) et/ou la butée de fin de course (14) sont réalisés d'une seule pièce avec le composant (13), notamment et en le même matériau.
